# NEUE EUROPÄISCHE PATENTSCHRIFT

(11) **EP 2 276 136 B2**
(45) Veröffentlichungstag und Bekanntmachung des Hinweises auf die Entscheidung über den Einspruch: **04.04.2018**
(45) Hinweis auf die Patenterteilung: 30.07.2014
(21) Anmeldenummer: 09161166.5
(22) Anmeldetag: 26.05.2009
(51) Int. Cl.: H02H 3/04, H02H 9/04, H02H 7/122

(54) **Überspannungsschutz für Wechselrichter mit eingangsseitigem EMV-Filter**
Excess voltage protection for inverter with input EMC filter
Protection contre les surtensions pour onduleur dotée d'un filtre EMV côté entrée

(43) Veröffentlichungstag der Anmeldung: 19.01.2011
(73) Patentinhaber: SMA Solar Technology AG, 34266 Niestetal (DE)
(72) Erfinder: Jeppe, Andreas, 37215 Witzenhausen (DE); Wolf, Dr.-Ing. Henrik, 34123 Kassel (DE); Westphal, Torben, 34127 Kassel (DE); Bremicker, Sven, 36211 Alheim (DE); Greizer, Frank, 34260 Kaufungen (DE); Häring, Adrian, 34266 Niestetal (DE)
(74) Vertreter: Lahnor, Peter

(56) Entgegenhaltungen:
- EP-A1- 1 914 857
- DE-A1- 3 442 932
- DE-A1-102004 003 306
- DE-A1-102007 007 921
- JP-A- 2001 186 664
- US-A1- 2008 094 867
- US-B1- 6 947 266

## Beschreibung

Die Erfindung bezieht sich auf eine Überspannungsschutzvorrichtung für einen Wechselrichter zur Einspeisung elektrischer Energie von einer Gleichspannungsquelle insbesondere in ein Wechselstromnetz, mit den Merkmalen des Oberbegriffs des unabhängigen Patentanspruchs 1. Weiterhin wird ein für eine solche Überspannungsschutzvorrichtung besonders gut geeigneter Überspannungsableiter aufgezeigt. Zudem geht es um eine bevorzugte Anwendung der neuen Überspannungsschutzvorrichtung bzw. des neuen Überspannungsableiters.

Vornehmlich steht die vorliegende Erfindung im Zusammenhang mit Wechselrichtern, mit denen elektrische Energie von einer Photovoltaikanlage als Gleichspannungsquelle in ein Wechselstromnetz eingespeist wird. Bei Photovoltaikanlagen ist es üblich, einzelne Solarmodule zu Gruppen, sogenannten Strings, zusammenzufassen, die dann über eine gemeinsame Verkabelung mit dem Wechselrichter verbunden werden. Die vorliegende Erfindung ist aber nicht auf Photovoltaikanlagen als Gleichspannungsquellen beschränkt.

Insbesondere ist die Erfindung für Wechselrichter zur Einspeisung elektrischer Energie in ein Wechselstromnetz vorgesehen. Grundsätzlich kann der Wechselrichter aber auch der Einspeisung elektrischer Energie von der jeweiligen Gleichspannungsquelle unmittelbar in einen Verbraucher, wie beispielsweise eine elektrische Maschine, dienen.

Gerade bei Wechselrichtern zur Einspeisung elektrischer Energie von Photovoltaikanlagen besteht aber aufgrund der großen Gesamtfläche der Solarmodule und der Länge deren Verkabelung bis zu dem jeweiligen Wechselrichter eine erhöhte Gefahr, dass durch Blitzeinschläge in der näheren Umgebung, sogenannte Naheinschläge, transiente Überspannungen in die Verkabelungen der Strings eingekoppelt und auf den Wechselrichter übertragen werden. Diese transienten Überspannungen stellen eine Gefährdung für sämtliche elektronische und elektrische Bauteile des Wechselrichters dar.

### STAND DER TECHNIK

Zum Schutz von Wechselrichtern zur Einspeisung von elektrischer Energie von Photovoltaikanlagen in Wechselstromnetze vor transienten Überspannungen ist es üblich, Überspannungsableiter an alle Zuleitungen zu dem Wechselrichter anzuschließen, und zwar so, dass diese Überspannungsableiter sowohl zwischen den Zuleitungen als auch zwischen jeder einzelnen Zuleitung und Erde wirksam sind. Durch diese Überspannungsableiter wird der Wechselrichter maximal geschützt, wenn sie erst direkt vor seiner Gleichspannungs-Eingangsstufe vorgesehen sind.

Bei einer Überspannungsschutzvorrichtung mit den Merkmalen des Oberbegriffs des unabhängigen Patentanspruchs 1 weist eine Gleichspannungs-Eingangsstufe des Wechselrichters ein EMV-Filter auf, das Entstörkapazitäten und Entstörinduktivitäten umfasst. Dieses EMV-Filter dient mit weiteren Maßnahmen der elektromagnetischen Verträglichkeit der Einspeisung von elektrischer Energie über den Wechselrichter in das Wechselstromnetz.

Ein solche Überspannungsschtzvorrichtung ist aus DE 3442932 bekannt.

Den Erfindern ist aufgefallen, dass auftretende transiente Überspannungen durch Überspannungsableiter vor der Gleichspannungs-Eingangsstufe eines Wechselrichters nicht so vollständig abgeleitet werden, dass sich der Spannungspegel am Eingang der Gleichspannungs-Eingangsstufe des Wechselrichters nicht doch noch transient ändert. In der Gleichspannungs-Eingangsstufe kann es aufgrund der transienten Änderung des Spannungspegels zur Anregung von Schwingungen der durch die Entstörkapazitäten und Entstörinduktivitäten des EMV-Filters vorliegenden Schwingkreise kommen. Diese Schwingungen können eine deutlich höhere Amplitude als ihre Anregung aufweisen, so dass sich trotz der erfolgten Abschwächung einer transienten Überspannung durch die Überspannungsableiter vor der Gleichspannungs-Eingangsstufe des Wechselrichters nach dem EMV-Filter wieder eine auf ein gefährliches Maß erhöhte transiente Überspannung ergeben kann.

Unter der Produktbezeichnung DEHNguard® sind Überspannungsableiter der Firma DEHN + SÖHNE GmbH + Co. KG, Nürnberg, Deutschland, bekannt, bei denen zwei alternative Ableitpfade vorgesehen sind. In dem einen Ableitpfad ist ein Varistor angeordnet, in dem anderen eine Schmelzsicherung. Ein Umschalter zwischen den beiden Pfaden ist zunächst auf den einen Pfad mit dem Varistor gelegt, steht aber unter Federvorspannung in Richtung auf den anderen Pfad mit der Schmelzsicherung. Er wird in dieser Schaltstellung gehalten, solange ein in thermischen Kontakt mit dem Varistor stehendes Schmelzelement nicht aufgeschmolzen ist. Wird der Varistor so stark beansprucht, dass seine Erwärmung zu einem Aufschmelzen des Schmelzelements führt, wird hierdurch der Umschalter freigegeben, und er schaltet den Ableitstrom auf die Schmelzsicherung um. Bei weiter anhaltendem Ableitstrom schmilzt die Schmelzsicherung auf. Ein dabei möglicherweise auftretender Lichtbogen wird von der Schmelzsicherung selbst gelöscht, die hierfür entsprechend ausgebildet ist und die gegenüber den Einwirkungen des Lichtbogens resistent ist. Der Umschalter legt nicht nur den Ableitstrom auf die Schmelzsicherung um, sondern verschiebt auch einen nach außen aus dem Überspannungsableitern herausführenden Signalstift, an dem optisch oder durch einen Mikroschalter erfasst werden kann, dass der Überspannungsschutz irreversibel beansprucht wurde und zumindest des Austausches des Schmelzelements und einer Überprüfung der Schmelzsicherung bedarf. Diese bekannten Überspannungsableiter sind in ihrem Aufbau aufwändig; sie erfordern eine spezielle selbstlöschende Schmelzsicherung; und sie sind entsprechend kostspielig.

Üblicherweise weist eine Gleichspannungs-Eingangsstufe eines Wechselrichters eine Pufferkapazität erheblicher Größe auf, um die getaktete Stromabnahme durch den Wechselrichter von den stromführenden Leitungen zu kompensieren bzw. deren rückwärtige Auswirkungen zu glätten.

### AUFGABE DER ERFINDUNG

Der Erfindung liegt die Aufgabe zugrunde, einen Wechselrichter zur Einspeisung von elektrischer Energie von einer mehrere Strings umfassenden Photovoltaikanlage in ein Wechselstromnetz bereitzustellen, dessen elektronische und elektrische Bestandteile effektiv und kosteneffizient vor transienten Überspannungen und deren Folgen geschützt werden.

### LÖSUNG

Die Aufgabe der Erfindung wird durch einen Wechselrichter mit den Merkmalen des unabhängigen Patentanspruchs 1 gelöst. Die abhängigen Patentansprüche sind auf bevorzugte Ausführungsformen des neuen Wechselrichters gerichtet.

### BESCHREIBUNG DER ERFINDUNG

Bei der neuen Überspannungsschutzvorrichtung sind die Überspannungsableiter zum Ableiten von Überspannungen gegenüber Erde von der Gleichspannungsquelle aus gesehen hinter dem EMV-Filter an die stromführenden Leitungen des Wechselrichters angeschlossen. Die Überspannungsableiter können so auch Überspannungen ableiten, die auf Anregungen des EMV-Filters in Folge transienter Überspannungen zurückgehen und den Wechselrichter auch vor diesen Überspannungen schützen.

Dabei erweist es sich als ausreichend, die Überspannungsableiter hinter dem EMV-Filter nur zwischen die Leitungen und Erde zu schalten. Das heißt, auf Überspannungsableiter, die für Überspannungen zwischen den einzelnen Leitungen wirksam sind, kann verzichtet werden. Dies ist eine Auswirkung der in der Gleichspannungs-Eingangsstufe von der Gleichspannungsquelle aus gesehen hinter den Überspannungsableitern zwischen die Leitungen geschalteten Pufferkapazität. Die Größe dieser Pufferkapazität ist in aller Regel ausreichend, Überspannungen zwischen den Leitungen, die noch keine Ableitung zur Erde auslösen, auf ein ungefährliches Maß abzupuffern.

Dies gilt insbesondere dann, wenn bei der neuen Überspannungsschutzvorrichtung weitere Überspannungsableiter von der Gleichspannungsquelle aus gesehen vor dem EMV-Filter an die Leitungen oder an Zuleitungen von Teilen der Gleichspannungsquelle zu den Leitungen angeschlossen sind. Diese Zuleitungen können beispielsweise die Verkabelung von einzelnen Strings einer Photovoltaikanlage sein. Die weiteren Überspannungsableiter schützen damit auch das EMV-Filter und sorgen dafür, dass sich auch die Möglichkeit der Anregung des EMV-Filters zu Schwingungen in Grenzen hält, selbst wenn es mit ihrer Hilfe nicht möglich ist, jegliche Überspannungen hinter dem EMV-Filter infolge von in die Zuleitung eingekoppelten transienten Überspannungen zu verhindern.

Die weiteren Überspannungsableiter können irgendwo zwischen der jeweiligen Gleichspannungsquelle bzw. deren Teilen und dem EMV-Filter der Gleichspannungs-Eingangsstufe vorgesehen werden. Bevorzugt ist es jedoch, wenn diese weiteren Überspannungsableiter unmittelbar vor dem EMV-Filter an die Leitungen oder die Zuleitungen angeschlossen sind. Das heißt, es ist bevorzugt, wenn diese weiteren Überspannungsableiter räumlich entfernt von der Gleichspannungsquelle oder deren Teilen am Ort des Wechselrichters vorgesehen sind, insbesondere unmittelbar in einem Gehäuse des Wechselrichters. Dies hat einmal zur Folge, dass alle in die Zuleitungen eingekoppelten transienten Überspannungen auch von den weiteren Überspannungsableitern abgeleitet werden können, bevor sie auf das EMV-Filter treffen. Zum anderen können die Überspannungsableiter am Ort des Wechselrichters zentral überwacht werden. Selbstverständlich können aber zum Schutz beispielsweise einzelner Solarmodule noch weitere Überspannungsableiter in deren Nähe an die Zuleitungen angeschlossen sein.

Bei den weiteren Überspannungsableitern ist es bevorzugt, wenn diese nicht nur gegenüber Erde, sondern auch zwischen den Leitungen oder Zuleitungen wirksam sind.

Konkret können für die weiteren Überspannungsableiter insbesondere unmittelbar im Gehäuse des Wechselrichters Steckplätze vorgesehen sein, deren Besetzung durch Schalter einer Überwachungseinrichtung abgefragt wird. Diese selben Schalter werden vorzugsweise umgeschaltet, wenn der jeweilige Überspannungsableiter soweit belastet wurde, dass er eine ohne äußeren Eingriff irreversible Änderung erfahren hat. Konkret können die weiteren Überspannungsableiter jeweils zwei parallele Ableitpfade aufweisen, wobei in den einen Ableitpfad ein Varistor und in den anderen Ableitpfad eine selbstlöschende Schmelzsicherung geschaltet ist und wobei ein Umschalter von dem einen Ableitpfad auf den anderen umschaltet sowie der zugehörige Schalter an dem Steckplatz umgeschaltet wird, wenn der Varistor einer vordefinierten thermischen Belastung ausgesetzt wurde.

Derartige Überspannungsableiter können grundsätzlich auch als die erfindungsgemäßen von der Gleichspannungsquelle aus gesehen hinter dem EMV-Filter angeordneten Überspannungsableiter Verwendung finden. Die damit anfallenden zusätzlichen Kosten sind zwar aufgrund der geringeren Anzahl der notwendigen Überspannungsableiter, weil nur Überspannung gegen Erde abgesichert werden müssen, reduziert. Der zusätzliche Kostenaufwand bleibt aber auch dann immer noch erheblich.

Erfindungsgemäß wird daher ein Überspannungsableiter insbesondere zum Einsatz an dieser Stelle vorgeschlagen, bei dem eine Reihenschaltung aus einem Varistor und einer thermisch mit dem Varistor gekoppelten Schmelzsicherung vorgesehen ist, wobei eine Überwachungseinrichtung die über der Schmelzsicherung abfallende Spannung erfasst. Aufgrund der thermischen Kopplung unterbricht die Schmelzsicherung den Ableitstrom durch den Varistor, wenn dieser zu überhitzen droht. Dabei kann ein Lichtbogen zwischen den durch das Aufschmelzen voneinander getrennten Teilen der Schmelzsicherung auftreten. Dieser Lichtbogen kann von der Überwachungseinrichtung auf einfache Weise erfasst werden, weil er mit einem charakteristischen Spannungsabfall über der Schmelzsicherung verbunden ist. Solange die Schmelzsicherung noch nicht aufgeschmolzen ist, liegt die über ihr abfallende Spannung bei null. Wenn die Schmelzsicherung aufgeschmolzen ist und den Ableitstrom unterbricht, wobei kein Lichtbogen (mehr) vorliegt, entspricht die über ihr abfallende Spannung der Spannung der Leitung, an die sie angeschlossen ist, gegenüber Erde. Nur wenn ein Lichtbogen vorliegt, beträgt der Spannungsabfall abweichend von diesen Werten mehrere zehn Volt entsprechend dem Innenwiderstand des Lichtbogens.

Es ist damit möglich, bei dem neuen Überspannungsableiter Schmelzsicherungen zu verwenden, die nicht selbstlöschend sind und entsprechend sehr viel kostengünstiger als spezielle selbstlöschende Schmelzsicherungen. Die Überwachungseinrichtung kann nämlich einen anhand des charakteristischen Spannungsabfalls erkannten Lichtbogen in der Schmelzsicherung durch eine Schalterbetätigung löschen. Dabei kann es sich um die Betätigung eines speziellen Löschschalters handeln, der die den Lichtbogen aufrechterhaltende externe Spannung über der Schmelzsicherung für kurze Zeit unterbricht. Soweit der neue Überspannungsableiter jedoch in einer neuen Überspannungsschutzvorrichtung eingesetzt wird, ist es bevorzugt, wenn die Überwachungseinrichtung zur Lichtbogenlöschung sowieso vorhandene Schalter des Wechselrichters so betätigt, dass die den Lichtbogen aufrechterhaltende externe Spannung zumindest vorübergehend zusammenbricht.

Die Überwachungseinrichtung kann in jedem Fall feststellen, wie der Zustand der Schmelzsicherung ist und diesen Zustand nach außen ausgeben, um auf die Notwendigkeit eines Austausches der Schmelzsicherung hinzuweisen.

Sämtliche bei der neuen Überspannungsschutzvorrichtung bevorzugt zum Einsatz kommenden Überspannungsableiter führen aber auch dann, wenn sie ohne äußeren Eingriff irreversibel durch einen hohen Ableitstrom verändert wurden, nicht dazu, dass der Wechselrichter seine Grundfunktion einbüßt. Vielmehr kann er nach dem Ablöschen etwaiger Lichtbögen weiter betrieben werden, um elektrische Energie von der Gleichspannungsquelle einzuspeisen, auch wenn sein Überspannungsschutz dann nur noch eingeschränkt oder möglicherweise sogar gar nicht mehr vorhanden ist. Allerdings ist die Gefahr des Auftretens mehrerer transienter Überspannungen hintereinander statistisch gesehen zu vernachlässigen.

Bevorzugt ist es bei dem neuen Überspannungsableiter bzw. der neuen Überspannungsschutzvorrichtung, wenn die Überwachungseinrichtung eine autarke Energieversorgung aufweist, die sowohl vor den abzuleitenden transienten Überspannungen geschützt ist, als auch keine Abhängigkeit von der Eingangsspannung des Wechselrichters oder einer Netzspannung eines Wechselstromnetzes hat, da der Überspannungsschutz beispielsweise auch nachts und bei Netzausfall zu gewährleisten ist. Zumindest sollte die Überwachungseinrichtung für längere Zeiten selbstversorgend sein, wozu aber die Versorgung aus einem geeignet dimensionierten Akkumulator, Kondensator oder anderen Energiepuffer ausreichend ist.

Mit besonders großen Vorteilen ist die Verwendung der neuen Überspannungsschutzvorrichtung und/oder des neuen Überspannungsableiters bei einem Wechselrichter zur Einspeisung elektrischer Energie von einer mehrere Strings umfassenden Photovoltaikanlage in einem Wechselstromnetz verbunden, weil hier die Gefahr des Einkoppelns transienter Überspannungen durch Naheinschläge aufgrund der Länge der Verkabelung der Strings besonders hoch ist.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wird im Folgenden anhand von Ausführungsbeispielen unter Bezugnahme auf die beigefügten Zeichnungen näher erläutert und beschrieben.
- **Fig. 1**: ist eine Prinzipdarstellung der erfindungsgemäßen Überspannungsschutz- vorrichtung.
- **Fig. 2**: zeigt den sekundären Überspannungsschutz der Überspannungsschutz- vorrichtung gemäß Fig. 1 in separater Darstellung.
- **Fig. 3**: ist ein Blockdiagramm zur Erläuterung der Lichtbogenlöschung bei einem der Überspannungsableiter gemäß Fig. 2.
- **Fig.4**: skizziert eine erste Variante zur Lichtbogenlöschung bei einem der Über- spannungsableiter gemäß Fig. 2.
- **Fig.5**: zeigt eine zweite Variante zur Lichtbogenlöschung bei einem der Über- spannungsableiter gemäß Fig. 2; und
- **Fig. 6**: zeigt eine dritte Variante zur Lichtbogenlöschung bei einem der Über- spannungsableiter gemäß Fig. 2.

### FIGURENBESCHREIBUNG

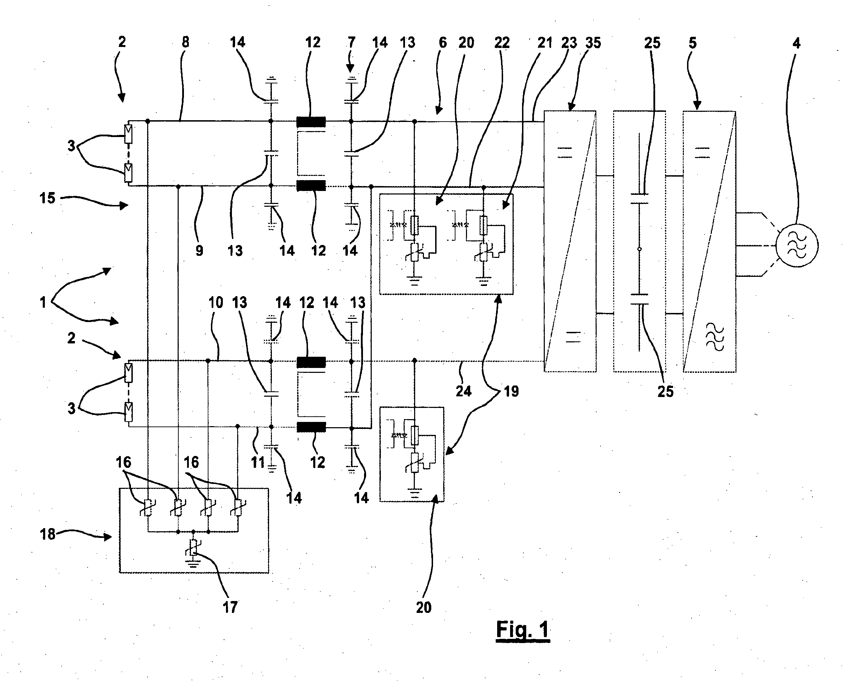

**Fig. 1** skizziert eine Schaltungsanordnung zur Einspeisung von elektrischer Energie von einer Photovoltaikanlage 1 mit hier zwei Strings 2 bestehend aus jeweils mehreren Solarmodulen 3 in ein Wechselstromnetz 4. Die Einspeisung erfolgt über einen Wechselrichter 5, der eine Gleichspannungs-Eingangsstufe 6 aufweist. Zu der Gleichspannungs-Eingangsstufe 6 gehört ein EMV-Filter 7, das in jeder von den Strings 2 kommenden Zuleitung 8 bis 11 Entstörinduktivitäten 12 aufweist. Weiterhin umfasst das EMV-Filter 7 Entstörkapazitäten 13 und 14, die zwischen den jeweils zwei Zuleitungen 8 und 9 bzw. 10 und 11 eines Strings 2 bzw. den Zuleitungen 8 bis 11 und Erde vorgesehen sind. Von den Solarmodulen 3, d. h. der als Gleichspannungsquelle 15 dienenden Photovoltaikanlage aus gesehen vor dem EMV-Filter sind Überspannungsableiter 16 und 17 vorgesehen, die transiente Überspannungen auf jeder der Zuleitungen 8 bis 11 gegenüber einer der anderen Zuleitungen oder Erde ableiten. Diese Überspannungsableiter 16 und 17 bilden einen primären Überspannungsschutz 18, der wie alle nachfolgenden Teile bis einschließlich des Wechselrichters 5 an einem zentralen Ort vorgesehen und vorzugsweise in einem gemeinsamen Gehäuse untergebracht ist. Von der Gleichspannungsquelle 15 aus gesehen hinter dem EMV-Filter 7 ist ein sekundärer Überspannungsschutz 19 vorgesehen, der die nachgeschalteten Teile des Wechselrichters 5 vor transienten Überspannungen schützt, die trotz des primären Überspannungsschutzes 18 bis hinter das EMV-Filter gelangen oder die durch das zu Schwingungen angeregte EMV-Filter sogar wieder verstärkt werden. Der sekundäre Überspannungsschutz 19 weist Überspannungsableiter 20 und 21 auf, die zwischen die durchgehenden Zuleitungen 8 und 10 einerseits sowie Erde andererseits bzw. eine zusammengefasste stromführende Leitung 22 beider Strings 2 einerseits sowie Erde andererseits geschaltet sind. Auch die durchgehenden Zuleitungen 8 und 10 werden hier jenseits des EMV-Filters 7 als stromführende Leitungen 23 und 24 bezeichnet, da sie einem DC/DC-Wandler 35 der Gleichspannungs-Eingangsstufe 6 Strom zuführen. Weiterhin sind in der Gleichspannungs-Eingangsstufe 6 Pufferkapazitäten 25 vorgesehen. Aufgrund einer üblichen großen Dimensionierung der Pufferkapazitäten 25 ist es ausreichend, dass die Überspannungsableiter 20 und 21 des sekundären Überspannungsschutzes 19 nur gegenüber Erde und nicht zwischen den Leitungen 22 bis 24 vorgesehen sind. Überdies sind die Überspannungsableiter 20 und 21 im Gegensatz zu den Überspannungsableitern 16 und 17 des primären Überspannungsschutzes 18, bei denen es sich um das Produkt DEHNguard® der Firma DEHN + SÖHNE GmbH + Co. KG, Nürnberg, Deutschland, handeln kann, vergleichsweise einfach aufgebaut.

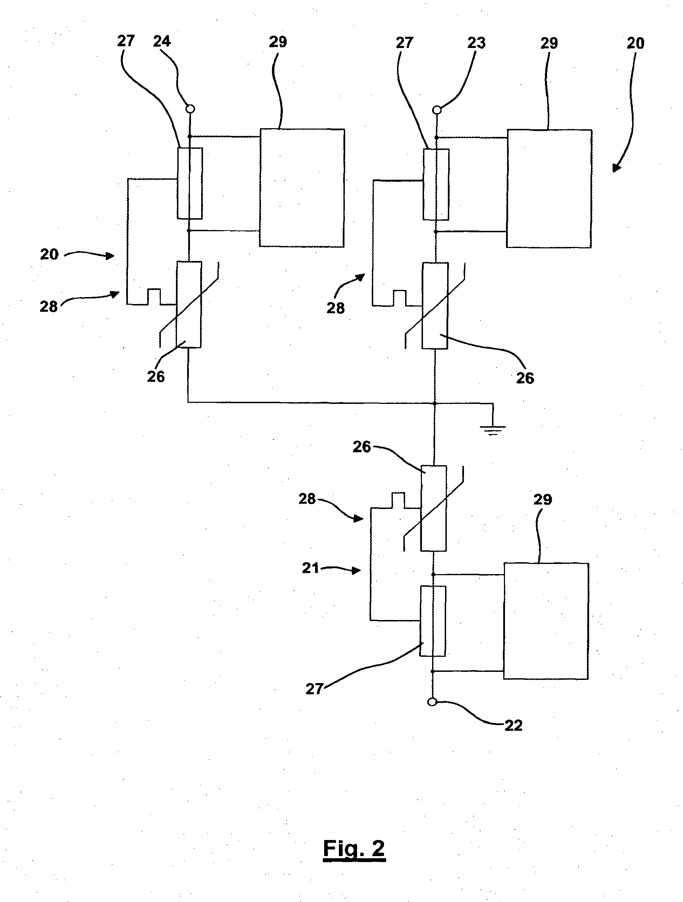

Ein möglicher konkreter Aufbau des Überspannungsschutzes 19 ist in **Fig. 2** skizziert. Die Überspannungsableiter 20 sind jeweils zwischen dem positiven Pol von zwei Strings sowie Erde vorgesehen, während der Überspannungsableiter 21 zwischen dem negativen Pol beider Strings und Erde vorgesehen ist. Jeder Überspannungsableiter 20 und 21 weist die Reihenschaltung eines Varistors 26 und einer Schmelzsicherung 27 auf, wobei eine thermische Kopplung 28 vorgesehen ist, die die jeweilige Schmelzsicherung 27 etwaigen Temperaturerhöhungen des zugehörigen Varistors 26 aussetzt. Dadurch wird erreicht, dass die Schmelzsicherung 27 aufschmilzt, wenn der zugehörige Varistor 26 durch Ableiten eines großen Ableitstroms aufgrund einer hohen transienten Überspannung droht, gescädigt zu werden oder bereits geschädigt wurde. Mit einer die Spannung über jeder Schmelzsicherung 27 erfassenden Überwachungseinrichtung 29 wird der aktuelle Zustand des jeweiligen Überstromableiters 20 und 21 erfasst. Wenn die jeweilige Schmelzsicherung 27 noch nicht aufgeschmolzen ist, liegt über ihr keine Spannung an. Wenn sie aufgeschmolzen ist, liegt über ihr die Spannung auf der zugehörigen Leitung gegenüber Erde an. Wenn jedoch zwischen den schmelzgetrennten Polen der Schmelzsicherung ein Lichtbogen brennt, erfasst die jeweilige Überwachungseinrichtung 29 eine charakteristische Spannung in der Größenordnung mehrerer 10 Volt, die von den beiden vorgenannten Spannungen bei null bzw. der vollen Spannung auf der jeweiligen Leitung gegenüber Erde signifikant abweicht. Wenn die Überwachungseinrichtung 29 einen Lichtbogen in der zugehörigen Schmelzsicherung 27 erfasst, löscht sie diesen Lichtbogen ab.

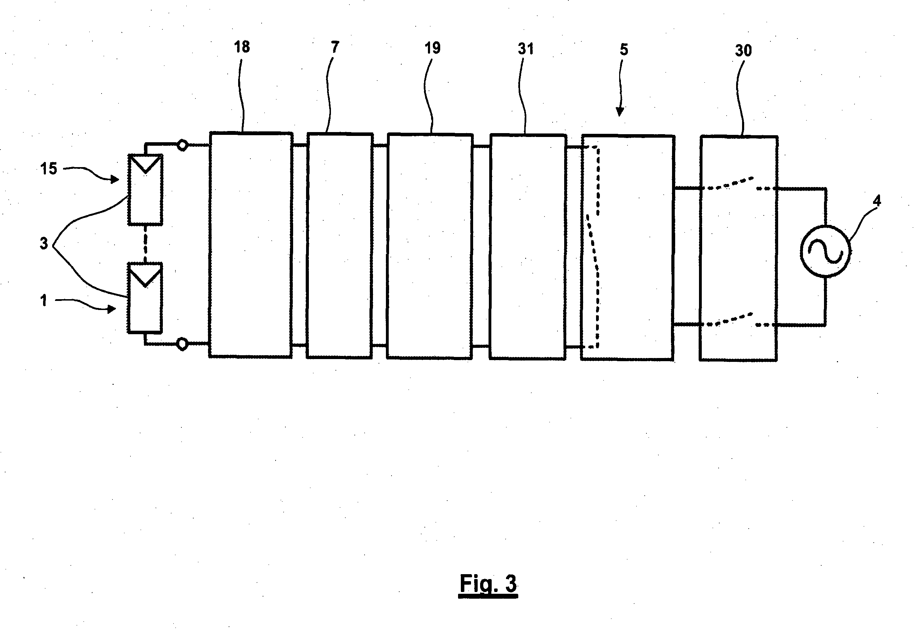

Das Blockschaltbild gemäß **Fig. 3** zeigt, dass zwischen dem Wechselrichter 5 und dem Netz 4 üblicherweise ein Netzrelais 30 vorgesehen ist. Durch Öffnen des Netzrelais 30 und Kurzschließen der Gleichspannungsquelle 1 über den Wechselrichter 5 fällt die den Lichtbogen speisende Spannung so weit ab, dass dieser erlischt, auch wenn die jeweilige Schmelzsicherung 27 gemäß Fig. 2 keine selbstablöschende Schmelzsicherung ist und auch nicht für die Dauerbelastung mit einem Lichtbogen geeignet ist. Fig. 3 zeigt zudem eine vorzugsweise zusätzlich vorgesehene Überstromsicherung 31 zur Absicherung der Gleichstromquelle 1.

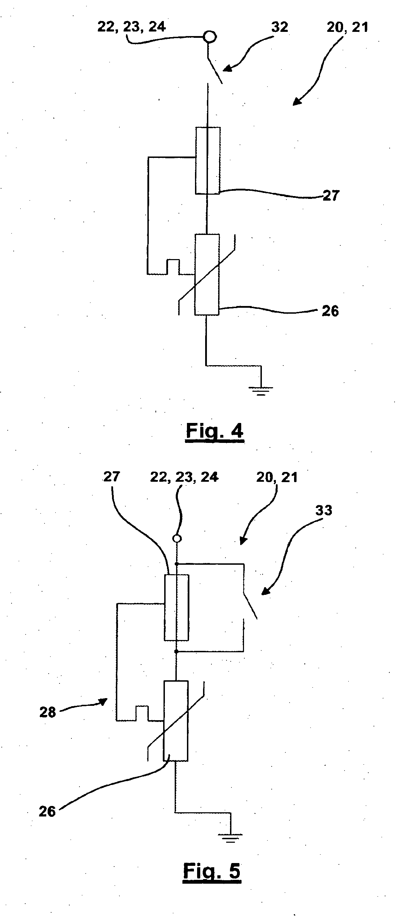

**Fig. 4** skizziert einen Überspannungsableiter 20 der 21, bei dem ein zusätzlicher Schalter 32 vorgesehen ist, durch dessen Öffnen ein Lichtbogen über der Sicherung gelöscht werden kann. In Fig. 4 ist wie in den noch folgenden Figuren die Überwachungseinrichtung 29, die die über der Schmelzsicherung 27 abfallende Spannung misst, jeweils der Übersichtlichkeit halber nicht dargestellt.

Bei einer Variante des Überspannungsableiters 20, 21 gemäß **Fig. 5** ist kein Schalter 32 in Reihe mit der Schmelzsicherung 27 geschaltet, sondern ein Schalter 33 parallel zu der Schmelzsicherung vorgesehen, durch dessen kurzzeitiges Schließen die den Lichtbogen unterhaltende Spannung über der Schmelzsicherung kurzgeschlossen werden kann, um den Lichtbogen zu löschen.

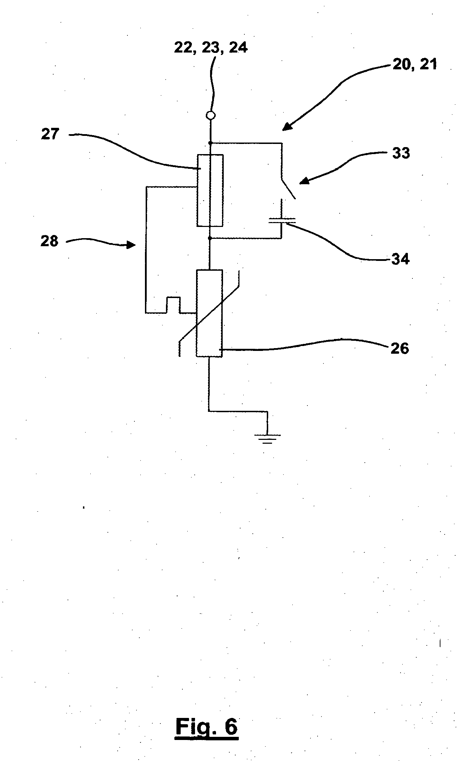

Gemäß **Fig. 6** ist dieser Schalter 33 mit einem Löschkondensator 34 in Reihe geschaltet, der die durch den Schalter 33 fließende Ladung, d. h. den Kurzschlussstrom, begrenzt.

### BEZUGSZEICHENLISTE

- 1: Photovoltaikanlage
- 2: String
- 3: Solarmodul
- 4: Wechselstromnetz
- 5: Wechselrichter
- 6: Gleichspannungs-Eingangsstufe
- 7: EMV-Filter
- 8: Zuleitung
- 9: Zuleitung
- 10: Zuleitung
- 11: Zuleitung
- 12: Entstörinduktivität
- 13: Entstörkapazität
- 14: Entstörkapazität
- 15: Gleichspannungsquelle
- 16: Überspannungsableiter
- 17: Überspannungsableiter
- 18: Primärschutz
- 19: Sekundärschutz
- 20: Überspannungsableiter
- 21: Überspannungsableiter
- 22: Leitung
- 23: Leitung
- 24: Leitung
- 25: Pufferkapazität
- 26: Varistor
- 27: Schmelzsicherung
- 28: Thermische Kopplung
- 29: Überwachungseinrichtung
- 30: Netzrelais
- 31: Überstromsicherung
- 32: Schalter
- 33: Schalter
- 34: Löschkondensator
- 35: DC/DC-Wandler

## Patentansprüche

1. Wechselrichter (5) zur Einspeisung elektrischer Energie von einer mehrere Strings (2) umfassenden Photovoltaikanlage (1) in ein Wechselstromnetz (4), mit einer mindestens zwei stromführende Leitungen (22 bis 24) und ein Entstörkapazitäten (13, 14) und Entstörinduktivitäten (12) umfassendes EMV-Filter (7) aufweisenden Gleichspannungs-Eingangsstufe (6), wobei Überspannungsableiter (20, 21) zum Ableiten von Überspannungen gegenüber Erde vorgesehen sind, **dadurch gekennzeichnet, dass** die Überspannungsableiter (20, 21) von der Gleichspannungsquelle (15) aus hinter dem EMV-Filter (7) an die Leitungen (22 bis 24) angeschlossen sind.

2. Wechselrichter nach Anspruch 1, **dadurch gekennzeichnet, dass** in der Gleichspannungs-Eingangsstufe (6) von der Gleichspannungsquelle (15) aus hinter den Überspannungsableitern (20, 21) eine Pufferkapazität (25) zwischen die Leitungen (22 bis 24) geschaltet ist und dass die Überspannungsableiter (20, 21) nur zwischen die Leitungen (22 bis 24) und Erde geschaltet sind.

3. Wechselrichter nach Anspruch 1 oder 2, **dadurch gekennzeichnet, dass** weitere Überspannungsableiter (16, 17) von der Gleichspannungsquelle (15) aus vor dem EMV-Filter (7) an die Leitungen (22 bis 24) oder an Zuleitungen (8 bis 11) von Teilen der Gleichspannungsquelle (15) zu den Leitungen (22 bis 24) angeschlossen sind.

4. Wechselrichter nach Anspruch 3, **dadurch gekennzeichnet, dass** die weiteren Überspannungsableiter (16, 17) räumlich entfernt von der Gleichspannungsquelle (15) oder deren Teilen am Ort des Wechselrichters (5) vor dem EMV-Filter (7) an die Leitungen (22 bis 24) oder die Zuleitungen (8 bis 11) angeschlossen sind.

5. Wechselrichter nach Anspruch 4, **dadurch gekennzeichnet, dass** die weiteren Überspannungsableiter (16, 17) in einem Gehäuse des Wechselrichters (5) an die Leitungen (22 bis 24) oder die Zuleitungen (8 bis 11) angeschlossen sind.

6. Wechselrichter nach einem der Ansprüche 3 bis 5, **dadurch gekennzeichnet, dass** die weiteren Überspannungsableiter (16, 17) zwischen jeder Leitung (22 bis 24) oder jeder Zuleitung (8 bis 11) und Erde einerseits und zwischen den Leitungen (22 bis 24) oder Zuleitungen (8 bis 11) andererseits wirksam sind.

7. Wechselrichter nach einem der Ansprüche 3 bis 6, **dadurch gekennzeichnet, dass** für die weiteren Überspannungsableiter (16, 17) Steckplätze vorgesehen sind, deren Besetzung durch Schalter einer Überwachungseinrichtung abgefragt wird.

8. Wechselrichter nach Anspruch 7, **dadurch gekennzeichnet, dass** die weiteren Überspannungsableiter (16, 17) die Schalter umschalten, wenn eine abgeleitete Überspannung eine dauerhafte Veränderung des jeweiligen Überspannungsableiters herbeigeführt hat.

9. Wechselrichter nach Anspruch 8, **dadurch gekennzeichnet, dass** die weiteren Überspannungsableiter (16, 17) jeweils zwei parallele Ableitpfade aufweisen, wobei in den einen Ableitpfad ein Varistor und in den anderen Ableitpfad eine selbstlöschende Schmelzsicherung geschaltet ist, wobei ein Umschalter von dem einen Ableitpfad auf den anderen umschaltet und der zugehöre Schalter umgeschaltet wird, wenn der Varistor einer vordefinierten thermischen Belastung ausgesetzt wurde.

10. Wechselrichter nach einem der Ansprüche 1 bis 9, **dadurch gekennzeichnet, dass** mindestens einer der Überspannungsableiter (20, 21) eine Reihenschaltung aus einem Varistor (26) und einer thermisch mit dem Varistor (26) gekoppelten Schmelzsicherung (27) aufweist, wobei eine Überwachungseinrichtung (29) die über der Schmelzsicherung (27) abfallende Spannung erfasst.

11. Wechselrichter nach Anspruch 10, **dadurch gekennzeichnet, dass** die Überwachungseinrichtung (29) eine autarke Energieversorgung aufweist.

12. Wechselrichter nach Anspruch 10 oder 11, **dadurch gekennzeichnet, dass** die Schmelzsicherung (27) nicht selbstlöschend ist.

13. Wechselrichter nach einem der Ansprüche 10 bis 12, **dadurch gekennzeichnet, dass** die Überwachungseinrichtung (29) einen durch einen charakteristischen Spannungsabfall erkannten Lichtbogen in der Schmelzsicherung (27) durch eine Schalterbetätigung löscht.

14. Wechselrichter nach Anspruch 13, **dadurch gekennzeichnet, dass** die Überwachungseinrichtung (29) Schalter des Wechselrichters (5) zur Spannungsablöschung betätigt.

## Claims

1. Inverter (5) for feeding electric energy from a photovoltaic device (1) including several strings (2) into an AC power grid (4), comprising a DC voltage input stage (6), the DC voltage input stage (6) comprising at least two current-carrying lines (22 to 24) and an EMC filter (7) including interference suppressing capacitors (13, 14) and interference suppressing inductors (12), wherein surge arrestors (20, 21) are provided for diverting overvoltages against earth, **characterized in that** the surge arrestors (20, 21) are connected to the lines (22 to 24) after the EMC filter (7), from the point of view of the DC voltage source (15).

2. Inverter according to claim 1, **characterized in that**, in the DC voltage input stage (6), a buffer capacitance (25) is connected between the lines (22 to 24) after the surge arrestors (20, 21), from the point of view of the DC voltage source (15), and that the surge arrestors (20, 21) are connected only between the lines (22 to 24) and earth.

3. Inverter according to claim 1 or 2, **characterized in that** further surge arrestors (16, 17) are connected to the lines (22 to 24) or to the feed lines (8 to 11) of parts of the DC voltage source (15) towards the lines (22 to 24) before the EMC filter (7), from the point of view of the DC voltage source (15).

4. Inverter according to claim 3, **characterized in that** the further surge arrestors (16, 17) are connected to the lines (22 to 24) or to the feed lines (8 to 11) before the EMC filter (7) spatially remote from the DC voltage source (15) or its parts at the location of the inverter (5).

5. Inverter according to claim 4, **characterized in that** the further surge arrestors (16, 17) are connected to the lines (22 to 24) or to the feed lines (8 to 11) within a housing of the inverter (5).

6. Inverter according to any of the claims 3 to 5, **characterized in that** the further surge arrestors (16, 17) are effective between each line (22 to 24) or each feed line (8 to 11) and earth, on the one hand, and between the lines (22 to 24) or feed lines (8 to 11), on the other hand.

7. Inverter according to any of the claims 3 to 6, **characterized in that** plug-in positions are provided for the further surge arrestors (16, 17) the occupancy of which is monitored by switches of a monitoring device.

8. Inverter according to claim 7, **characterized in that** the further surge arrestors (16, 17) switch switches, when a diverted overvoltage has caused a permanent change of the respective surge arrestor.

9. Inverter according to claim 8, **characterized in that** the further surge arrestors (16, 17) each comprise two parallel diversion paths, wherein a varistor is connected in the one diversion path and a self-extinguishing lead fuse is connected in the other diversion path, wherein a selector switch switches from the one diversion path to the other diversion path, and the associated switch is switched over, when the varistor has been subjected to a predefined thermal load.

10. Inverter according to any of the claims 1 to 9, **characterized in that** at least one of the surge arrestors (20, 21) comprises a series connection of a varistor (26) and a lead fuse (27) thermally coupled to the varistor, wherein a monitoring device (29) monitors the voltage across the lead fuse (27).

11. Inverter according to claim 10, **characterized in that** the monitoring device (29) comprises a self-sustained energy supply.

12. Inverter according to claim 10 or 11, **characterized in that** the lead fuse (27) is not self-extinguishing.

13. Inverter according to any of the claims 10 to 12, **characterized in that** the monitoring device (29) extinguishes an electric arc in the lead fuse (27), which is recognized by a characteristic voltage drop, by a switch operation.

14. Inverter according to claim 13, **characterized in that** the monitoring device (29) operates switches of the inverter (5) for voltage extinction.

## Revendications

1. Onduleur (5) destiné à l'alimentation en énergie électrique d'une installation photovoltaïque (1) comprenant plusieurs chaînes (2) dans un réseau à tension alternative (4), comprenant un niveau d'entrée de tension en courant continu (6) présentant au moins deux conduites conductrices (22 à 24) et un filtre EMV (7) comprenant des capacités antiparasites (13, 14) et des inductances antiparasites (12), étant entendu que des parafoudres (20, 21) sont prévus pour dériver des surtensions par rapport à la terre, **caractérisé en ce que** les parafoudres (20, 21) sont raccordés de la source de tension en courant continu (15) aux conduites (22 à 24) à l'arrière du filtre EMV (7).

2. Onduleur selon la revendication 1, **caractérisé en ce que** dans le niveau d'entrée de tension en courant continu (6) de la source de tension en courant continu (15), une capacité de tampon (25) est montée entre les conduites (22 à 24) depuis l'arrière des parafoudres (20, 21) et **en ce que** les parafoudres (20, 21) sont uniquement montés entre les conduites (22 à 24) et la terre.

3. Onduleur selon la revendication 1 ou 2, **caractérisé en ce que** d'autres parafoudres (16, 17) sont raccordés à partir de la source de tension en courant continu (15) avant le filtre EMV (7), aux conduites (22 à 24) ou à des conduites d'amenée (8 à 11) de parties de la source de tension en courant continu (15) jusqu'aux conduites (22 à 24).

4. Onduleur selon la revendication 3, **caractérisé en ce que** les autres parafoudres (16, 17) sont raccordés à distance de la source de tension en courant continu (15) ou de ses parties à l'emplacement de l'onduleur (5), avant le filtre EMV (7), aux conduites (22 à 24) ou aux conduites d'amenée (8 à 11).

5. Onduleur selon la revendication 4, **caractérisé en ce que** les autres parafoudres (16, 17) sont raccordés dans un boîtier de l'onduleur (5) aux conduites (22 à 24) ou aux conduites d'amenée (8 à 11).

6. Onduleur selon l'une des revendications 3 à 5, **caractérisé en ce que** les autres parafoudres (16, 17) sont actifs, d'une part, entre chaque conduite (22 à 24) ou chaque conduite d'amenée (8 à 11) et la terre, et d'autre part, entre les conduites (22 à 24) ou les conduites d'amenée (8 à 11).

7. Onduleur selon l'une des revendications 3 à 6, **caractérisé en ce qu'**il est prévu pour les autres parafoudres (16, 17) des emplacements d'enfichage, dont l'occupation est demandée au niveau d'un dispositif de surveillance au moyen de commutateurs.

8. Onduleur selon la revendication 7, **caractérisé en ce que** les autres parafoudres (16, 17) commutent les commutateurs quand une surtension dérivée a provoqué une modification durable du parafoudre concerné.

9. Onduleur selon la revendication 8, **caractérisé en ce que** les autres parafoudres (16, 17) présentent chacun deux chemins de dérivation, étant entendu qu'une varistance est montée dans un chemin de dérivation et un coupe-circuit à fusible auto-extinguible dans l'autre chemin de dérivation, étant entendu qu'un inverseur réalise une commutation d'un chemin de dérivation à l'autre et que le commutateur correspondant est commuté quand la varistance a été exposée à une contrainte thermique prédéfinie.

10. Onduleur selon l'une des revendications 1 à 9, **caractérisé en ce qu'**au moins un des parafoudres (20, 21) présente un montage en série constitué d'une varistance (26) et d'un coupe-circuit à fusible (27) couplé thermiquement avec la varistance (26), étant entendu qu'un dispositif de surveillance (29) mesure la tension retombant au-delà du coupe-circuit à fusible (27).

11. Onduleur selon la revendication 10, **caractérisé en ce que** le dispositif de surveillance (29) présente une alimentation en énergie autonome.

12. Onduleur selon la revendication 10 ou 11, **caractérisé en ce que** le coupe-circuit à fusible (27) n'est pas auto-extinguible.

13. Onduleur selon l'une des revendications 10 à 12, **caractérisé en ce que** le dispositif de surveillance (29) éteint un arc électrique détecté par le biais d'une chute de tension caractéristique dans le coupe-circuit à fusible (27) en actionnant des commutateurs.

14. Onduleur selon la revendication 13, **caractérisé en ce que** le dispositif de surveillance (29) actionne des commutateurs de l'onduleur (5) aux fins de l'extinction de l'arc électrique.
